# EUROPÄISCHE PATENTSCHRIFT

(11) **EP 3 332 627 B1**
(45) Veröffentlichungstag und Bekanntmachung des Hinweises auf die Patenterteilung: **06.01.2021**
(21) Anmeldenummer: 17186090.1
(22) Anmeldetag: 14.08.2017
(51) Int. Cl.: A01D 41/127

(54) **ELEKTRISCH ANGETRIEBENES SCHNEIDWERK AN EINER LANDWIRTSCHAFTLICHEN ARBEITSMASCHINE**
ELECTRICALLY DRIVEN CUTTING UNIT ON AN AGRICULTURAL WORKING MACHINE
BARRE DE COUPE À COMMANDE ÉLECTRIQUE D'UNE MACHINE AGRICOLE

(30) Priorität: 06.12.2016 DE 102016123518
(43) Veröffentlichungstag der Anmeldung: 13.06.2018
(73) Patentinhaber: CLAAS Selbstfahrende Erntemaschinen GmbH, 33428 Harsewinkel (DE)
(72) Erfinder: Fischer, Frédéric, 59823 Arnsberg (DE); Sprigade, Daniel, 59427 Unna (DE); Heymann, Philipp, 59519 Möhnesee Wamel (DE); Kettelhoit, Boris, 33335 Gütersloh (DE); Neitemeier, Dennis, 59510 Lippetal (DE)
(74) Vertreter: CLAAS Gruppe

(56) Entgegenhaltungen:
- EP-A1- 1 510 123
- EP-A1- 2 253 196
- EP-A1- 2 976 936
- US-A1- 2012 227 369
- US-A1- 2013 152 535

## Beschreibung

Die vorliegende Erfindung betrifft eine landwirtschaftliche Arbeitsmaschine mit einem Schneidwerk gemäß dem Oberbegriff des Anspruchs 1.

Landwirtschaftlichen Arbeitsmaschinen, wie beispielsweise Mähdrescher oder Feldhäcksler, weisen in der Regel als Schneidwerke ausgebildete Vorsätze auf. Die Vorsätze umfassen häufig Schneidwerkarbeitsaggregate zum Schneiden, Aufnehmen und Fördern von Erntegut, wie zum Beispiel Messerbalken, Haspeln, Förderschnecken, Mitnehmer, Einzugswalzen und/oder Förderbänder. Üblicherweise werden die Schneidwerkarbeitsaggregate durch einen mechanischen Antrieb angetrieben, der über eine Gelenkwelle von der Zapfwelle der landwirtschaftlichen Arbeitsmaschine her gespeist wird. Nachteilig ist hier der konstruktive Aufwand zur Übertragen der Antriebsleistung an die jeweiligen Schneidwerkarbeitsaggregate. Zudem sind mechanisch angetriebene Schneidwerke in der Regel starken Vibrationen ausgesetzt, die die Leistung und Lebensdauer dieser Schneidwerke begrenzen. Insbesondere bedingen mechanisch angetriebene Schneidwerkarbeitsaggregate eine umständliche, begrenzte und kostenintensive Regelung und Steuerung der Schneidwerkarbeitsaggregate, unter anderem verursacht durch für die Regelung erforderliche Sensoren. Wechselnde Erntebedingungen wie Bestandsdichten, Feuchte und Erntegutarten erfordern jedoch bei unzureichender Regelung eine erhöhte Aufmerksamkeit des Fahrzeugführers, um zum Beispiel einen Erntegutstau oder Beschädigungen des Schneidwerks zu vermeiden. Alternativ ist bekannt, hydraulische Antriebe in Form von Hydromotoren einzusetzen. Eine präzise Regelung der Antriebe ist hier gleichfalls aufwendig und kostenintensiv, da hier ebenfalls unter anderem zusätzliche Sensoren erforderlich sind. Zusätzlich ist das Verhältnis von zugeführter und abgegebener Leistung bei Verwendung von Hydromotoren häufig ungünstig.

Vereinzelt wurde in jüngerer Zeit für die Schneidwerkarbeitsaggregate von landwirtschaftlichen Arbeitsmaschinen auch die Verwendung von Elektromotoren zu deren Antrieb vorgeschlagen. Durch die sinkenden Kosten für elektrische Antriebe ist es möglich, eine Vielzahl von Schneidwerkarbeitsaggregaten direkt mit eigenen elektrischen Antrieben auszustatten und zum Großteil auf Getriebe und Übersetzungen zum Weiterleiten der Antriebsleistung zu verzichten. Diese elektrischen Antriebe haben zudem den Vorteil einer kleinen Bauform. Elektrische Antriebe ermöglichen des Weiteren eine einfache und präzise Regelung der Schneidwerkarbeitsaggregate. Beispielsweise offenbart die Druckschrift EP 1 510 123 A1 eine elektrisch angetriebene Haspel, die lastabhängig höhenverstellt wird. Zur Messung der Last ist das Drehantriebssystem mit einem Strommessgerät ausgestattet. Nachteilig an diesem Verfahren ist die Verwendung von zusätzlichen Sensoren für die Messung und Regelung des Antriebs. Des Weiteren erfolgt mit den erfassten Daten lediglich eine Regelung der Haspel selbst, während andere Arbeitsaggregate des Schneidwerks oder der landwirtschaftlichen Arbeitsmaschine von der gemessenen Last am Haspelantrieb unbeeinflusst bleiben.

Aus der US2012/0227369 ist eine Arbeitsmaschine mit einem Schneidwerk bekannt, wobei der Motor in Abhängigkeit von der Last gesteuert wird.

Aus der US2013/0152535 ist ein Schneidwerk bekannt, wobei die Motorsteuerung auf eine Verklemmung eines Schneidwerks reagiert.

Aufgabe der Erfindung ist es, die beschriebenen Nachteile des Standes der Technik zu beheben und insbesondere eine landwirtschaftliche Arbeitsmaschine mit einem Schneidwerk mit elektrischen Antrieben zu schaffen, bei der die Regelung verbessert ist und die Kosten für die Regelung reduziert sind.

Die Aufgabe wird gelöst mit einer landwirtschaftliche Arbeitsmaschine mit den Merkmalen des unabhängigen Patentanspruchs 1. Vorteilhafte Ausführungsformen sind den abhängigen Ansprüchen entnehmbar.

Indem eine landwirtschaftliche Arbeitsmaschine ein Schneidwerk und eine Steuer- und Regeleinheit umfasst, wobei das Schneidwerk elektrische Antriebe zum Betreiben von Schneidwerkarbeitsaggregaten aufweist, wobei die landwirtschaftliche Arbeitsmaschine mindestens ein Stromumwandlungssystem zum Betreiben der elektrischen Antriebe aufweist, wobei die elektrischen Antriebe und/oder das Stromumwandlungssystem mindestens ein vorhandenes Sensorsystem aufweisen, dass zum Betrieb und zum Steuern des jeweiligen elektrischen Antriebs der Schneidwerkarbeitsaggregate erforderlich ist, wobei die Steuer- und Regeleinheit dazu eingerichtet ist, aus Messsignalen des vorhandenen Sensorsystems Lastsignale zu generieren, und aus den Lastsignalen Betriebszustände der Schneidwerkarbeitsaggregate abzuleiten, und die Schneidwerkarbeitsaggregate anhand des Betriebszustandes zu regeln und/oder eine Ernte-Regelstrategie der landwirtschaftlichen Arbeitsmaschine an den Betriebszustand anzupassen, wird eine kostengünstige und präzise Überwachung und Regelung der Schneidwerkarbeitsaggregate und/oder der landwirtschaftlichen Arbeitsmaschine ermöglicht. Dadurch kann ein optimaler Erntegutfluss bereits am Anfang des erntegutverarbeitenden Prozesses in der landwirtschaftlichen Arbeitsmaschine sichergestellt werden und die Effizienz des gesamten erntegutverarbeitenden Prozesses gesteigert werden.
Die erforderlichen Lastsignale zur Regelung der Schneidwerkarbeitsaggregate werden dabei aus Messsignalen generiert, die systemimmanent in den elektrischen Systemen der landwirtschaftlichen Arbeitsmaschine und/oder dem Schneidwerk bereits vorliegen. Synergieeffekte werden genutzt, wodurch sich zusätzliche Sensoren zur Erfassung der erforderlichen Parameter und/oder Regelung der Schneidwerkarbeitsaggregate erübrigen.

In einer vorteilhaften Ausgestaltung sind die elektrischen Antriebe als Rotationsantriebe und/oder als Linearantriebe ausgebildet, und jeder Rotationsantrieb weist im Betrieb ein Drehmoment und eine Drehzahl, und jeder Linearantrieb im Betrieb eine lineare Kraft und eine Geschwindigkeit auf. Dadurch können je nach Schneidwerkarbeitsaggregat mechanische Übersetzungen eingespart werden.

In einer weiteren bevorzugten Ausgestaltung umfassen die Messsignale eine Stromstärke, eine Geschwindigkeit des jeweiligen Linearantriebs und/oder eine Drehzahl des jeweiligen Rotationsantriebs. Diese Messsignale sind in der Regel notwendig zum Betrieb und zum Steuern der elektrischen Antriebe und damit einfacher verfügbar.

Damit aus dem Messsignal ein für die Regelung und Überwachung durch die Steuer- und Regeleinheit leicht verwertbares Signal entsteht, ist in einer vorteilhaften Ausgestaltung der Erfindung vorgesehen, dass ein erstes Lastsignal ein Drehmoment und/oder eine lineare Kraft des jeweiligen elektrischen Antriebs umfasst, wobei das Drehmoment und/oder die lineare Kraft aus der gemessenen jeweiligen Stromstärke berechnet sind.

Um die Regelung weiter zu vereinfachen, ist in einer vorteilhaften Ausgestaltung der Erfindung vorgesehen, dass ein weiteres Lastsignal eine Leistung des jeweiligen elektrischen Antriebes umfasst, welche aus dem berechneten Drehmoment und der gemessenen Drehzahl des jeweiligen Rotationsantriebs, und/oder aus der berechneten linearen Kraft und der gemessenen Geschwindigkeit des jeweiligen Linearantriebs berechnet ist.

Gemäß der Erfindung ist vorgesehen, dass die Betriebszustände einen Verschleißzustand, einen Lastzustand und/oder einen Überlastungszustand der jeweiligen Schneidwerkarbeitsaggregate und/oder der zugeordneten elektrischen Antriebe umfassen. Durch Differenzierung der Betriebszustände wird die Regelung und Überwachung weiter vereinfacht. So kann zum Beispiel der Verschleißzustand bei der Bewertung des Lastzustandes berücksichtigt werden.

In einer weiteren vorteilhaften Ausgestaltung ist die Steuer- und Regeleinheit dazu eingerichtet, den Verschleißzustand durch Abgleich des Drehmoments, der Drehzahl, der linearen Kraft und/oder der Geschwindigkeit der elektrischen Antriebe, insbesondere in einem Leerlaufbetrieb, mit abgespeicherten Referenzwerten zu bestimmen. Dadurch kann der Verschleißzustand auf technisch einfache Weise ermittelt und überwacht werden.

In einer bevorzugten Ausführungsform ist die Steuer- und Regeleinheit dazu eingerichtet, in Abhängigkeit des Verschleißzustands Warnungen und/oder einen Verschleißgrad der Schneidwerkarbeitsaggregate und/oder der elektrischen Antriebe dem Fahrzeugführer anzuzeigen, und/oder den Verschleißzustand in einen digitalen Wartungsplan zu implementieren. Dadurch wird der Fahrer über den Verschleißzustand übersichtlich informiert. Insbesondere werden dadurch Schäden an der landwirtschaftlichen Arbeitsmaschine und/oder ineffiziente arbeitende Schneidwerkarbeitsaggregate vermieden.

In einer weiteren vorteilhaften Ausgestaltung ist die Steuer- und Regeleinheit dazu eingerichtet, den Lastzustand aus dem Drehmoment, der linearen Kraft und/oder der Leistung der jeweiligen elektrischen Antriebe abzuleiten. Dadurch kann der Lastzustand auf technisch einfache Weise ermittelt werden.

In einer bevorzugten Ausführungsform sind Soll-Lastzustände für die jeweiligen Schneidwerkarbeitsaggregate und/oder elektrischen Antriebe vorgegeben, und die Steuer- und Regeleinheit ist dazu eingerichtet, bei Abweichung des Lastzustands von dem vorgegebenen Soll-Lastzustand am jeweiligen Schneidwerkarbeitsaggregat eine Fahrzeuggeschwindigkeit der landwirtschaftlichen Arbeitsmaschine und/oder eine Position der Schneidwerkarbeitsaggregate derart anzupassen, sodass der jeweilige Soll-Lastzustand eingehalten wird. Dadurch wird der Fahrzeugführer entlastet und eine Effizienz der landwirtschaftlichen Arbeitsmaschine erhöht.

Um Energie zu sparen und den Verschleiß zu reduzieren, ist in einer weiteren bevorzugten Ausführungsform vorgesehen, dass die Steuer- und Regeleinheit dazu eingerichtet ist, bei einem reduzierten Drehmoment und/oder einer reduzierten linearen Kraft die Drehzahl und/oder die Geschwindigkeit der jeweiligen elektrischen Antriebe zu reduzieren. So können zum Beispiel die Schneidwerkarbeitsaggregate im Vorgewende automatisch verlangsamt oder gestoppt werden.

In einer weiteren vorteilhaften Ausgestaltung ist die Steuer- und Regeleinheit dazu eingerichtet, den Überlastungszustand aus dem Drehmoment, der linearen Kraft, der Drehzahl, der Geschwindigkeit und/oder aus deren Gradienten abzuleiten, und es sind Überlastungsgrenzwerte für die jeweiligen Schneidwerkarbeitsaggregate und/oder elektrischen Antriebe vorgegeben, wobei bei einer Überschreitung mindestens eines Überlastungsgrenzwertes der Überlastungszustand vorliegt. Dadurch kann der Überlastungszustand auf technisch einfache Weise ermittelt werden.

Damit Schäden, zum Beispiel hervorgerufen durch Fremdkörper, oder Gutstaus am jeweiligen Schneidwerkarbeitsaggregat inklusive dem elektrischen Antrieb vermieden werden, ist die Steuer- und Regeleinheit dazu eingerichtet, beim Vorliegen des Überlastungszustands den jeweiligen elektrischen Antrieb zu stoppen. Eine Rutschkupplung am jeweiligen Schneidwerkarbeitsaggregat ist dadurch nicht mehr erforderlich.

Die vorliegende Erfindung wird nachstehend anhand von in den Zeichnungen dargestellten Ausführungsbeispielen näher erläutert. Es zeigen:
- Fig. 1: eine schematisch Ansicht einer landwirtschaftlichen Arbeitsmaschine mit einem Schneidwerk sowie einen schematische Darstellung einer Verarbeitung von Messsignalen durch eine Regel- und Steuereinheit;
- Fig. 2: eine detaillierte Bestimmung und Verwendung von Betriebszuständen und zwar in (a) eines Verschleißzustands; in (b) eines Lastzustands; in (c) eines Überlastungszustands.

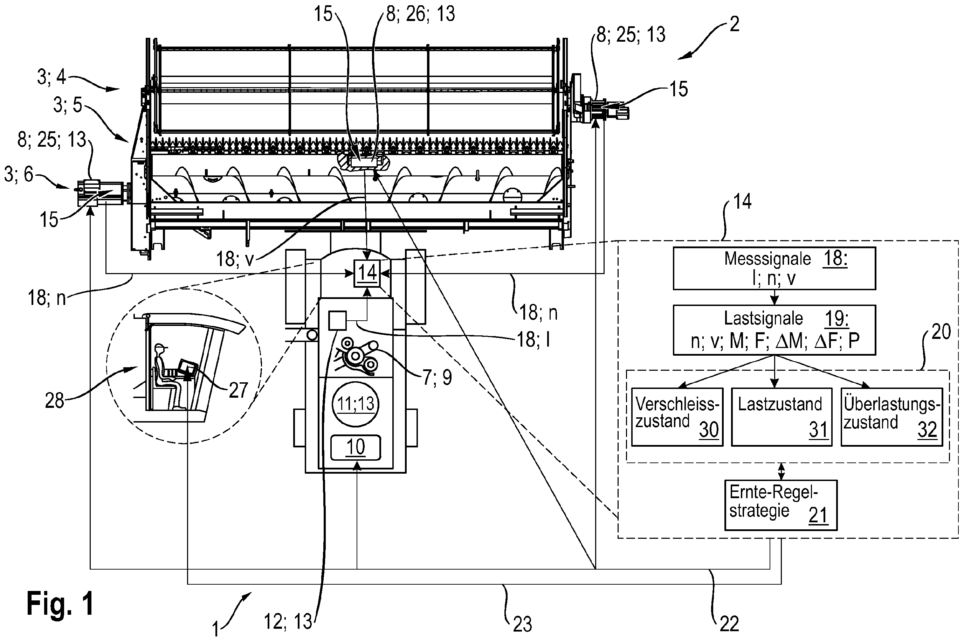

Fig.1 zeigt eine schematische Ansicht von oben einer landwirtschaftliche Arbeitsmaschine 1 mit einem als Schneidwerk 2 ausgebildeten Vorsatzgerät. Die landwirtschaftliche Arbeitsmaschine 1 ist bevorzugt als selbstfahrende Erntemaschine ausgebildet. Im vorliegenden Beispiel ist die selbstfahrende Erntemaschine als Mähdrescher ausgebildet. Das Schneidwerk 2 ist im vorliegenden Bespiel als Getreideschneidwerk ausgebildet. Es liegt jedoch im Rahmen der Erfindung, dass das Schneidwerk 2 auch als ein anderer Schneidwerkstyp ausgebildet sein kann, so zum Beispiel als Rapsschneidwerk, Sojaschneidwerk, Sonnenblumenpflückvorsatz, Maispflücker oder als reihenabhängiges oder reihenunabhängiges Maisgebiss.

Das Schneidwerk 2 umfasst Schneidwerkarbeitsaggregate 3. Die Schneidwerkarbeitsaggregate 3 umfassen im vorliegenden Beispiel jeweils eine Haspel 4, eine Schneidvorrichtung 5 und/oder eine Querförderschnecke 6. Andere Schneidwerkarbeitsaggregate 3 sind in Abhängigkeit des Schneidwerkstyps denkbar. So können die Schneidwerkarbeitsaggregate 3 weiterhin zum Beispiel als eine Einzugswalze, Förderbänder, Mitnehmer und/oder Pflückeinrichtungen ausgebildet sein.

Beim Ernteprozess wird Erntegut mittels der als oszillierender Messerbalken ausgebildeten Schneidvorrichtung 5 abgeschnitten und mit Hilfe der sich drehenden Haspel 4 zur Querförderschnecke 6 befördert. Die rotierende Querförderschnecke 6 befördert das Erntegut zur Mitte der Querförderschnecke 6, wo es von Fingern der Querförderschnecke 6 erfasst und einem Schrägförderer zugeführt wird. Der Schrägförderer transportiert dann das Erntegut zum Dreschwerk 9, wo ein Großteil der Körner ausgedroschen wird. Anschließend wird noch nicht ausgedroschenes Korn einer Trennvorrichtung zugeführt, wo das restliche Korn abgetrennt wird. Die in dem Dreschwerk 9 und in der Trennvorrichtung abgetrennten Körner werden anschließend in einer Reinigungsvorrichtung von verbliebenden Nicht-Kornbestandteilen gereinigt. Das Dreschwerk 9, die Trennvorrichtung und die Reinigungsvorrichtung werden folgend als nachgeordnete Arbeitsaggregate 7 bezeichnet.

Die Effizienz des Ernteprozesses hängt aufgrund eines kontinuierlichen Erntegutflusses in einer Prozesskette gleichermaßen sowohl von den Schneidwerksaggregaten als auch von den dem Schneidwerk nachgeordneten Arbeitsaggregaten ab. Zur Verbesserung ihrer Regelbarkeit weisen die einzelnen Schneidwerksaggregate elektrische Antriebe 8 auf. Dabei umfasst mindestens ein Schneidwerkarbeitsaggregat 3 zumindest einen elektrischen Antrieb 8. Vorzugsweise sind sämtliche Schneidwerksaggregate 3 mit elektrischer Antrieben ausgestattet. Die elektrischen Antriebe 8 sind als Rotationsantriebe 25 oder als Linearantriebe 26 ausgebildet. Während die Rotationsantriebe 25 bevorzugt rotierenden Komponenten der Schneidwerksaggregate 3 zugeordnet sind, sind die Linearantriebe 26 vorzugsweise sich linear bewegenden Komponenten der Schneidwerksaggregate 3 zugeordnet. So wird die linear oszillierende Schneidvorrichtung 5 bevorzugt von mindestens einem Linearantrieb 26 angetrieben. Die Haspel 5 wird im Betrieb mittels mindestens eines Rotationsantriebs 25 um eine Drehachse der Haspel rotiert. Die Querförderschnecke 6 wird im Betrieb ebenfalls mittels mindestens eines Rotationsantriebs 26 um eine Drehachse der Querförderschnecke 6 rotiert. Des Weiteren können elektrische Antriebe 8 zur Positions- und/oder Neigungsverstellung der Schneidwerksaggregate 3, zum Beispiel einer Höhe der Haspel 4 und/oder einer Position des Schneidtisches, verwendet werden. Die elektrischen Antriebe 8 sind bevorzugt als Wechselstromantriebe ausgebildet. Es ist jedoch auch denkbar, elektrische Antriebe 8 als Gleichstromantriebe auszubilden. Weiterhin können die Wechselstromantriebe als eine Synchronmaschine oder als eine Asynchronmaschine ausgebildet sein. Vorzugsweise ist jeder Rotationsantrieb 25 als ein Asynchronmotor oder als ein Permanent-Magnet-Synchron-Motor (PMSM) ausgebildet. Des Weiteren ist jeder Linearantrieb 26 vorzugsweise als ein Permanent-Magnet-Synchron-Motor (PMSM) ausgebildet. Bevorzugt weist der Linearantrieb 26 der oszillierenden Schneidvorrichtung 5 Rückstellfedern auf, wodurch der Linearantrieb 26 der oszillierenden Schneidvorrichtung 5 auf technisch einfache Weise eine Schwingbewegung ausführen kann.

Die elektrischen Antriebe 8 werden mittels einer als Generator 11 ausgebildeten Stromquelle mit Strom versorgt. Der Generator 11 erzeugt einen Strom, vorzugsweise einen Wechselstrom, mit einer Stromstärke I, Spannung und einer Stromrichtung. Der Generator 11 ist vorzugsweise als Wechselstromgenerator ausgebildet. Es ist jedoch ebenfalls denkbar, dass der Generator als Gleichstrom-Generator ausgebildet ist. Der Generator 11 wird von einem Fahrzeugantrieb 10 angetrieben, welcher als zum Beispiel Verbrennungsmotor ausgebildet sein kann. Des Weiteren kann die landwirtschaftliche Arbeitsmaschine 1 einen Stromspeicher, zum Beispiel eine Batterie, als Stromquelle umfassen. Alternativ ist es denkbar, dass der Fahrzeugantrieb 10, der Generator 11 und der Stromspeicher in einem Hybridantrieb zusammengefasst sind.

Der vom Generator 11 erzeugte Strom wird von einem Stromumwandlungssystem 12 in Ströme mit der erforderlichen Spannung, Stromstärke I und Stromrichtung für die elektrischen Antriebe 8 umgewandelt. Das Stromumwandlungssystem 12 ist am Schneidwerk 2 oder an der landwirtschaftlichen Arbeitsmaschine 1 angeordnet. Bevorzugt ist das Stromumwandlungssystem 12 ein Umrichter. Weiterhin bevorzugt ist das Stromumwandlungssystem 12 ein Frequenzumrichter. Es liegt jedoch im Rahmen der Erfindung, dass das Stromumwandlungssystem 12 in Abhängigkeit der Stromquelle einen Gleichrichter oder einen Wechselrichter umfasst. Des Weiteren liegt es im Rahmen der Erfindung, dass das Stromumwandlungssystem 12 in dem Generator 11 und/oder in einer Batterie integriert ist.

Die elektrischen Antriebe 8, das Stromumwandlungssystem 12 sowie der Generator 11 werden im Folgenden gemeinschaftlich als elektrische Systeme 13 bezeichnet.

Das Stromumwandlungssystem 12 weist zudem mindestens ein vorhandenes Sensorsystem 15 auf, welches zum Betrieb und zum Steuern der elektrischen Antriebe 8 erforderlich ist. Das vorhandene Sensorsystem 15 ermöglicht dabei erst die Ausführung der Funktion des Stromumwandlungssystems 12. Die vorhandenen Sensorsysteme 15 sind somit systemimmanent. Häufig ist das vorhandene Sensorsystem 15 bereits baulich im Stromumwandlungssystem 12 integriert. Das vorhandene Sensorsystem 15 umfasst mindestens ein Stromstärkemessgerät und/oder ein Spannungsmessgerät. Durch Messung der Stromstärke I im Stromumwandlungssystem 12 stellt das Stromumwandlungssystem 12 die Stromstärke I für die jeweiligen elektrischen Antriebe 8 ein. Alternativ oder zusätzlich stellt das Stromumwandlungssystem 12 ebenfalls die Spannung und/oder eine Stromrichtung für die jeweiligen elektrischen Antriebe 8 durch Messung der Spannung und/oder Stromrichtung im Stromumwandlungssystem 12 ein.

Ebenso weisen die elektrischen Antriebe 8 jeweils vorhandene Sensorsysteme 15 auf, die für einen Betrieb und eine Steuerung des jeweiligen elektrischen Antriebes 8 erforderlich sind. Die vorhandenen Sensorsysteme 15 sind somit auch hier systemimmanent. Insbesondere umfassen die vorhandenen Sensorsysteme 15 der elektrischen Antriebe 8 dabei Lagesensoren, Wegesensoren, Abstandssensoren, Winkelsensoren und/oder Drehgeber. Damit werden in Abhängigkeit der elektrischen Antriebssysteme 8 unter anderem Drehzahlen n und/oder Geschwindigkeiten v in den elektrischen Antrieben 8 bestimmt.

Des Weiteren umfasst die landwirtschaftliche Arbeitsmaschine 1 eine Steuer- und Regeleinheit 14. Alternativ oder zusätzlich kann die Steuer- und Regeleinheit 14 am Schneidwerk 2 angeordnet sein. Die Steuer- und Regeleinheit 14 regelt unter anderem die Schneidwerkarbeitsaggregate 3. Dabei werden insbesondere die elektrischen Antriebe 8 der Schneidwerkarbeitsaggregate 3 geregelt. Des Weiteren kann die Steuer- und Regeleinheit 14 dazu eingerichtet sein, den Fahrzeugantrieb 10, ein Lenksystem und/oder ein Bremssystem der landwirtschaftlichen Arbeitsmaschine 1 zu regeln.

Durch eine präzise Regelung der elektrischen Antriebe 8 der einzelnen Schneidwerkarbeitsaggregate 3 ist der Erntegutfluss im Schneidwerk 2 steuerbar und damit die Effizienz der gesamten Prozesskette optimierbar. Zur Regelung sind jedoch Signale, genauer Lastsignale 19, erforderlich, die eine Aussage über eine Be- und/oder Auslastung des jeweiligen Schneidwerkarbeitsaggregats 3 zulassen. Erfindungsgemäß ist die Steuer- und Regeleinheit 14 dazu eingerichtet, aus Messsignalen 18 des vorhandenen Sensorsystems 15 Lastsignale 19 zu generieren, und aus den Lastsignalen 19 Betriebszustände 20 der Schneidwerkarbeitsaggregate 3 abzuleiten, und die Schneidwerkarbeitsaggregate 3 anhand des Betriebszustandes 20 zu regeln und/oder eine Ernte-Regelstrategie 21 der landwirtschaftlichen Arbeitsmaschine 1 an den Betriebszustand 20 anzupassen.
Dazu werden Messsignale 18 zuerst aus dem vorhandenen Sensorsystemen 15 des Stromumwandlungssystem 12 und/oder der elektrischen Antriebe 8 der Schneidwerkarbeitsaggregate 3 abgegriffen und an die Steuer- und Regeleinheit 14 weitergeleitet. Die Messsignale liegen dabei bereits systemimmanent in den elektrischen Systemen 13, insbesondere im Stromumwandlungssystem 12 und/oder den elektrischen Antrieben 8, vor. Es sind keine zusätzlichen Sensoren zur Regelung der Schneidwerkarbeitsaggregate 3 erforderlich. Die Steuer- und Regeleinheit 14 ist weiterhin dazu eingerichtet, dann aus den Messsignalen 18 der vorhandenen Sensorsysteme 15 Lastsignale 19 zu generieren. Dazu führt die Steuer- und Regeleinheit 14 einfache Berechnungen, insbesondere arithmetische Berechnungen, durch. Zudem kann die Steuer- und Regeleinheit 14 auf abgespeicherte Umrechnungsfaktoren oder abgespeicherte Kennlinienfelder zurückgreifen. Einzelne Messsignale 18 werden unter anderem auch direkt als Lastsignal 19 verwendet. Des Weiteren ist die Steuer- und Regeleinheit 14 dazu eingerichtet, in einem weiteren Schritt aus den Lastsignalen 19 Betriebszustände 20 der Schneidwerkarbeitsaggregate 3 abzuleiten. Dabei wird jeder Betriebszustand 20 durch mindestens ein Lastsignal 19 bestimmt. Darüber hinaus ist die Steuer- und Regeleinheit 14 dazu eingerichtet, die Schneidwerkarbeitsaggregate 3 anhand des Betriebszustandes 20 zu regeln und/oder eine Ernte-Regelstrategie 21 der landwirtschaftlichen Arbeitsmaschine 1 an den Betriebszustand 20 anzupassen. Die Regelung des Schneidwerkarbeitsaggregats umfasst dabei eine Regelung mindestens einer der elektrischen Antriebe 8 des Schneidwerkarbeitsaggregats 3. Unter anderem wird dabei eine Schnittfrequenz der Schneidvorrichtung 5, eine Rotationsgeschwindigkeit der Haspel 4 und/oder der Querförderschnecke 6 an den Betriebszustand 20 angepasst. Zum Beispiel werden die Schneidvorrichtung 5, die Haspel 4 und/oder die Querförderschnecke 6 derart geregelt, dass die Schnittfrequenz und/oder die die Rotationsgeschwindigkeit konstant bleiben. Die Ernte-Regelstrategie 21 umfasst unter anderem die Regelung einer Position, einer Höhe und/oder einer Neigung des Schneidwerks 2 und/oder der Schneidwerkarbeitsaggregate 3, die Regelung der elektrischen Antriebe 8 der Schneidwerkarbeitsaggregate 3 und/oder die Regelung einer Fahrzeuggeschwindigkeit der landwirtschaftlichen Arbeitsmaschine 1.

Jeder elektrische Antrieb 8 ist als ein Rotationsantrieb 25 und/oder als ein Linearantrieb 26 ausgebildet. Jeder Rotationsantrieb 25 weist dabei im Betrieb ein Drehmoment M und eine Drehzahl n auf. Jeder Linearantrieb 26 weist im Betrieb eine lineare Kraft F und eine Geschwindigkeit v auf. Jeder Rotationsantrieb 25 umfasst in der Regel einen Stator und einen sich drehenden Läufer. Die Drehzahl n wird dabei vorzugsweise am Läufer mittels des vorhandenen Sensorsystems 15, insbesondere mittels an sich bekannter Drehgeber oder Winkelsensoren, gemessen und zum Betrieb des Rotationsantriebs 25 verwendet.
Jeder Linearantrieb 26 umfasst in der Regel einen Stator und einen sich linear bewegenden Läufer. Die Geschwindigkeit v oder eine über eine definierte Zeit zurückgelegte Wegstrecke des Läufers, wird dabei vorzugsweise am Läufer mittels dem vorhandenen Sensorsystem 15, insbesondere mittels an sich bekannter Lage- und/oder Wegsensoren, gemessen und zum Betrieb des Linearantriebes 26 verwendet.

Die Messsignale 18 umfassen somit zumindest eine Stromstärke I, eine Geschwindigkeit v des jeweiligen Linearantriebes 26 und/oder eine Drehzahl n des jeweiligen Rotationsantriebes 25. Das Messsignal Stromstärke wird dabei am Stromumwandlungssystem 12 abgegriffen, während die Geschwindigkeit v und/oder die Drehzahl n an den elektrischen Antrieben 8 abgriffen wird. Es liegt im Rahmen der Erfindung, dass die Messsignale 18 alternativ oder zusätzlich einen Drehwinkel, eine Drehgeschwindigkeit, eine Position, einen Abstand, eine Zeit und/oder einen Weg im elektrischen Antrieb 8 umfassen. Die Messsignale 18 werden an die Steuer- und Regeleinheit 14 übermittelt.

Ein erstes Lastsignal 19 umfasst ein Drehmoment M und/oder eine lineare Kraft F des jeweiligen elektrischen Antriebs 8. Dazu berechnet die Steuer- und Regeleinheit 14 aus der gemessenen jeweiligen Stromstärke I des Stromumwandlungssystems 12 ein Drehmoment M oder eine lineare Kraft F für den jeweiligen elektrischen Antrieb 8. Dabei ist jede Stromstärke I einem elektrischen Antrieb 8 zugeordnet. Im Wesentlichen wird damit ebenfalls das Drehmoment M oder die lineare Kraft F für das zugehörige Schneidwerkarbeitsaggregat 3 berechnet. Zur Berechnung des Drehmoments M und/oder der linearen Kraft F aus der Stromstärke I wird vorzugsweise zumindest ein abgespeicherter Umrechnungsfaktor oder ein abgespeichertes Kennlinienfeld von der Steuer- und Regeleinheit 14 verwendet.

Des Weiteren ist die Steuer- und Regeleinheit 14 bevorzugt dazu eingerichtet, aus den Messsignalen 18 zumindest ein weiteres Lastsignal 19 zu generieren. Vorzugsweise umfasst das weitere Lastsignal 19 eine Leistung P. Dazu wird beim jeweiligen Rotationsantrieb 25 aus der gemessenen Drehzahl n und dem berechneten Drehmoment M eine jeweilige Leistung P berechnet. Dabei wird aus der gemessenen Drehzahl n eine Winkelgeschwindigkeit berechnet. Beim jeweiligen Linearantrieb 26 wird aus der gemessenen Geschwindigkeit v und der berechneten linearen Kraft F eine jeweilige Leistung P berechnet.

Des Weiteren ist die Steuer- und Regeleinheit 14 bevorzugt dazu eingerichtet, aus den Messsignalen 18 Drehmoment M und/oder lineare Kraft F Gradienten ΔM,ΔF als zusätzliche Lastsignale 19 abzuleiten. Dabei wird vorzugsweise ein erster Gradient ΔM aus der Änderung des Drehmoments M über der Zeit berechnet. Zudem wird vorzugsweise ein zweiter Gradient ΔF aus der Änderung der linearen Kraft F über der Zeit berechnet. Weitere Lastsignale, die die Steuer- und Regeleinheit berechnet, sind denkbar.

Die Steuer- und Regeleinheit 14 ist dazu eingerichtet, aus den Lastsignalen 19 im Folgenden Betriebszustände 20 abzuleiten. Die Betriebszustände 20 umfassen vorzugsweise einen Verschleißzustand 30, einen Lastzustand 31 und/oder einen Überlastungszustand 32 der jeweiligen Schneidwerkarbeitsaggregate 3 und/oder der zugeordneten elektrischen Antriebe 8. Sie dienen der Bewertung eines Materialzustandes, einer aktuellen Belastung mit Erntegut, und/oder einer rechtzeitigen Verhinderung einer Überbelastung der Schneidwerkarbeitsaggregate 3. Basierend auf den Betriebszuständen 20 erfolgt eine Regelung der Schneidwerkarbeitsaggregate 3 und/oder eine Anpassung der Ernte-Regelstrategie 21 der landwirtschaftlichen Arbeitsmaschine 1. Dazu sendet die Steuer- und Regeleinheit 14 Steuersignale 22 an Aktoren der Schneidwerkarbeitsaggregate 3 und/oder zum Beispiel an den Fahrzeugantrieb 10. Die Aktoren umfassen dabei bevorzugt elektrische 8, hydraulische und/oder mechanische Antriebe und/oder Hubzylinder. Des Weiteren werden Zustandsinformationen 23 der Betriebszustände 20, insbesondere vom Verschleißzustand 30, an eine Anzeigeeinheit 27 in einer Fahrzeugkabine 28 der landwirtschaftlichen Arbeitsmaschine 1 gesendet und dort dargestellt.

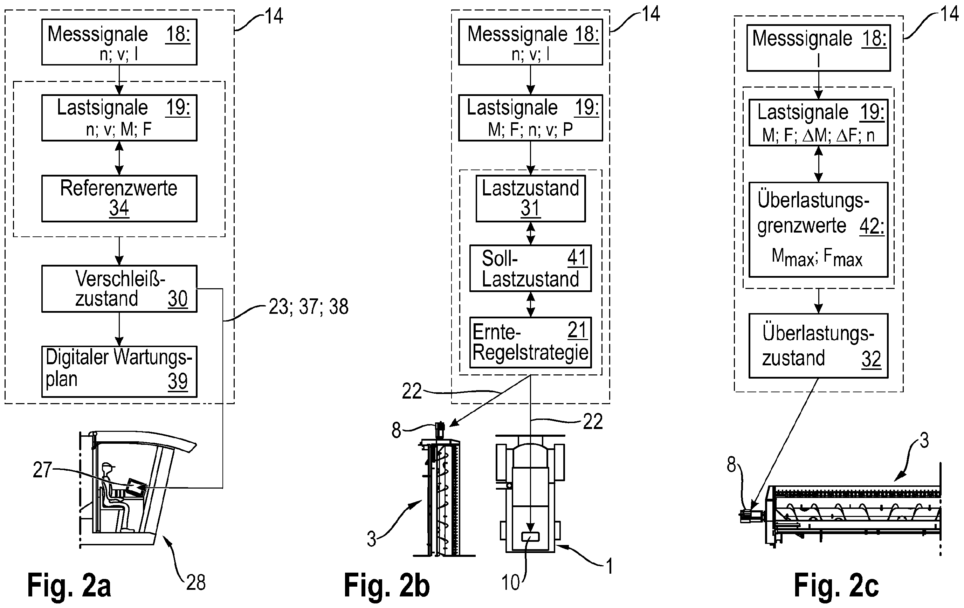

Fig. 2(a) zeigt eine Ermittlung und Verwendung des Betriebszustandes 20 Verschleißzustand 30. Dabei ist die Steuer- und Regeleinheit 14 dazu eingerichtet, den Verschleißzustand 30 durch Abgleich des Drehmoments M, der Drehzahl n, der linearen Kraft F und/oder der Geschwindigkeit v der elektrischen Antriebe 8 mit abgespeicherten Referenzwerten 34 zu bestimmen. Bevorzugt erfolgt dies in einem Leerlaufbetrieb. Vorzugsweise sind zudem periodische Schwankungen in den Drehmomenten M, linearen Kräften F, den Drehzahlen n und/oder den Geschwindigkeiten v ein Kriterium für den Verschleißzustand 30. So führen zum Beispiel beschädigte und/oder abgenutzte Messer häufig durch Reiben an Ihren Gegenschneiden zu periodisch schwankenden linearen Kräften F und Geschwindigkeiten v. Die Referenzwerte 34 werden herstellerseitig festgelegt. Alternativ kann der Fahrzeugführer eigene Referenzwerte 34 mittels einer Messung im Leerlaufbetrieb festlegen.

Weiterhin ist die Steuer- und Regeleinheit 14 dazu eingerichtet, in Abhängigkeit des Verschleißzustands 30 Warnungen 37 und/oder einen Verschleißgrad 38 der Schneidwerkarbeitsaggregate 3 und/oder der elektrischen Antriebe 8 dem Fahrzeugführer anzuzeigen. Der Verschleißgrad 38 umfasst dabei vorzugsweise auch Beschädigungen des Schneidwerkarbeitsaggregats 3. Dabei werden die Warnungen 37 und/oder der Verschleißgrad 38 auf der Anzeigeeinheit 27 in der Fahrzeugkabine 28 der landwirtschaftlichen Arbeitsmaschine 1 als Zustandsinformationen 23 angezeigt. Dazu ist die Anzeigeeinheit 27 mit der Steuer- und Regeleinheit 14 verbunden. Vorzugsweise wird der Verschleißgrad 38 farblich an einer schematischen Darstellung des jeweiligen Schneidwerkarbeitsaggregats 3 dargestellt. Bevorzugt sind die Warnungen 37 zudem akustisch. Des Weiteren ist die Steuer- und Regeleinheit 14 dazu eingerichtet, den Verschleißzustand 30 in einen digitalen Wartungsplan 39 zu implementieren. Der digitale Wartungsplan 39 zeigt dem Fahrzeugführer an, wann Teile der landwirtschaftlichen Arbeitsmaschine 1 oder des Schneidwerks 2 ausgetauscht oder gewartet werden müssen. Dazu wird der Verschleißzustand 30 mit abgespeicherten Wartungsgrenzwerten des digitalen Wartungsplans 39 verglichen. Daraus wird ein voraussichtlicher Wartungstermin berechnet, welcher dem Fahrzeugführer angezeigt wird.

Fig. 2(b) zeigt eine Ermittlung und Verwendung des Betriebszustandes 20 Lastzustand 31. Der Lastzustand 31 spiegelt insbesondere die Belastung des jeweiligen Schneidwerkarbeitsaggregats 3 mit Erntegut wieder. Die Steuer- und Regeleinheit 14 ist dazu eingerichtet, den Lastzustand 31 aus dem Drehmoment M, der linearen Kraft F und/oder der Leistung P der jeweiligen elektrischen Antriebe 8 abzuleiten. Eine Erhöhung der Leistung P stellt dabei eine Zunahme der Last im jeweiligen Schneidwerkarbeitsaggregat 3 dar. Insbesondere weist es auf eine Zunahme der Erntegutmenge im betroffenen Schneidwerkarbeitsaggregat 3 hin. Alternativ oder zusätzlich wird das Drehmoment M und/oder die lineare Kraft F zur Beurteilung der Last am jeweiligen Schneidwerk von der Steuer- und Regeleinheit verwendet.

Zudem sind Soll-Lastzustände 41 für die jeweiligen Schneidwerkarbeitsaggregate 3 und/oder elektrischen Antriebe 8 vorgegeben. Die Soll-Lastzustände 41 sind in der Steuer- und Regeleinheit 14 gespeichert. Sie umfassen Sollwerte für die Leistung P, das Drehmoment M und/oder die lineare Kraft F für den jeweiligen elektrischen Antrieb 8. Bevorzugt werden die Soll-Lastzustände 41 dynamisch an den Lastzustand 31 mindestens eines der anderen Schneidwerkarbeitsaggregate 3 und/oder an den Lastzustand 31 mindestens eines der nachgeordneten Arbeitsaggregate 7, wie zum Beispiel des Dreschwerks 9, angepasst. Vorzugsweise wird der Soll-Lastzustand 41 an den Soll-Lastzustand 41 des Schneidwerkarbeitsaggregats 3 und/oder des nachgeordneten Arbeitsaggregats 7 angepasst, welches durchsatzbeschränkend ist. Alternativ oder zusätzlich sind die Soll-Lastzustände 41 durch den Fahrzeugführer festlegbar.
Zudem ist die Steuer- und Regeleinheit 14 dazu eingerichtet, bei Abweichung des Lastzustands 31 von dem vorgegebenen Soll-Lastzustand 41 am jeweiligen Schneidwerkarbeitsaggregat 3 die Fahrzeuggeschwindigkeit und/oder eine Position der Schneidwerkarbeitsaggregate 3 derart anzupassen, sodass der jeweilige Soll-Lastzustand 41 eingehalten wird. Dadurch wird der Lastzustand 31 im Wesentlichen stets auf den Soll-Lastzustand 41 eingestellt. Dabei sendet die Steuer- und Regeleinheit 14 Steuersignale 22 an den Fahrzeugantrieb 10 und/oder an Aktoren der Schneidwerkarbeitsaggregate 3, wie zum Beispiel an Hubzylinder der Haspel 4, um eine Belastung des Schneidwerkarbeitsaggregats 3 mit Erntegut entsprechend anzupassen. So kann zum Beispiel im Falle einer zu hohen Last an der Querförderschnecke 6 die Fahrzeuggeschwindigkeit reduziert werden. Bei einer zu niedrigen Last zum Beispiel an der Haspel 4, kann die Haspel 4 abgesenkt werden, um das Erntegut besser zu erfassen. Dies ist unter anderem im Falle von Lagergetreide notwendig.

Des Weiteren ist die Steuer- und Regeleinheit 14 dazu eingerichtet, bei einem reduzierten Drehmoment M und/oder einer reduzierten linearen Kraft F die Drehzahl n und/oder die Geschwindigkeit v der jeweiligen elektrischen Antriebe 8 zu reduzieren. Zudem ist die Steuer- und Regeleinheit 14 dazu eingerichtet, bei einem vorliegenden Drehmoment M und/oder linearen Kraft F, welche im Wesentlichen einem Drehmoment M oder einer linearen Kraft F in einem Leerlaufbetrieb entsprechen, das heißt insbesondere beim Fehlen von Erntegut, den jeweiligen elektrischen Antrieb 8 zu stoppen. Dabei liegen diese Drehmomente und/oder linearen Kräfte vorzugsweise über eine definierte Zeitspanne vor, sodass kleine Bestandslücken unberücksichtigt bleiben können. Die Leerlasten, das heißt die Drehmomente M und/oder linearen Kräfte F im Leerlaufbetrieb, der jeweiligen elektrischen Antriebe 8 der Schneidwerkarbeitsaggregate 3 sind dabei vom Hersteller festgelegt und/oder vom Fahrzeugführer, bevorzugt im Leerlaufbetrieb, festlegbar.

Fig. 2(c) zeigt eine Ermittlung und Verwendung des Betriebszustandes 20 Überlastungszustand 32. Die Steuer- und Regeleinheit 14 ist dazu eingerichtet, den Überlastungszustand 32 aus dem Drehmoment M, der linearen Kraft F, der Drehzahl (n), der Geschwindigkeit (v) und/oder aus deren Gradienten ΔM,ΔF abzuleiten. Ein erster Gradient ΔM gibt eine Änderungsgeschwindigkeit des Drehmoments M an. Ein zweite Gradient ΔF gibt eine Änderungsgeschwindigkeit der linearen Kraft F an. Weitere Gradienten geben eine Änderungsgeschwindigkeit der Geschwindigkeit v und/oder der Drehzahl n an. Zudem sind Überlastungsgrenzwerte 42 für die jeweiligen Schneidwerkarbeitsaggregate 3 und/oder elektrischen Antriebe 8 vorgegeben. Bei einer Überschreitung mindestens einer der Überlastungsgrenzwerte 42 liegt der Überlastungszustand 32 vor. Dabei wird vorzugsweise ein Überlastungsgrenzwert 42 für den ersten Gradienten ΔM, den zweiten Gradienten ΔF und/oder für mindestens einen der weiteren Gradienten verwendet. Insbesondere wird dadurch bei einer schnellen und großen Zunahme des Drehmoments M und/oder der linearen Kraft F, und/oder einer schnellen und großen Abnahme der Geschwindigkeit v und/oder der Drehzahl n ein Überlastungszustand 32 erkannt. Eine schnelle und große Zunahme des Drehmoments M und/oder der linearen Kraft F und/oder einer schnellen und großen Abnahme der Geschwindigkeit v und/oder der Drehzahl n wird häufig durch eine Blockade des jeweiligen Schneidwerkarbeitsaggregats 3 ausgelöst. Insbesondere kann dies zum Beispiel durch plötzlich auftretenden Erntegutstau, Fremdkörper oder Schäden im Schneidwerkarbeitsaggregat 3 ausgelöst werden.
Alternativ oder zusätzlich kann als Überlastungsgrenzwert 42 ein Drehmoment-Grenzwert Mmax und/oder ein lineare Kraft-Grenzwert Fmax gesetzt werden. Somit wird das Schneidwerkarbeitsaggregat 3 auch bei einer langsamen Zunahme des Drehmoments M und/oder der linearen Kraft F geschützt. Insbesondere kann eine stetige Zunahme der Erntegutmenge zu einer Überschreitung des Drehmoment-Grenzwertes Mmax und/oder des linearen Kraft-Grenzwertes Fmax führen. Vorzugsweise liegen der Drehmoment-Grenzwert Mmax und/oder der lineare Kraft-Grenzwert Fmax unterhalb eines jeweiligen maximal zulässigen Grenzwertes des jeweiligen elektrischen Antriebes 8 und/oder des jeweiligen Schneidwerkarbeitsaggregats 3. Dadurch kann nach dem Anhalten des Schneidwerkarbeitsaggregats 3 beispielsweise durch Reversieren des Schneidwerkarbeitsaggregats 3, zum Beispiel der Querförderschnecke 6, ein vorliegender Erntegutstau, eine Verwicklung oder ein Fremdkörper, wieder aus dem betroffenen Schneidwerkarbeitsaggregats 3 entfernt werden, ohne einen maximal zulässigen Grenzwert zu überschreiten.

Weiterhin ist die Steuer- und Regeleinheit 14 dazu eingerichtet, beim Vorliegen des Überlastungszustands 32 den jeweiligen elektrischen Antrieb 8 zu stoppen. Vorzugsweise werden dabei auch andere elektrische Antriebe 8 des gleichen Schneidwerkarbeitsaggregats 3 gestoppt. Weiterhin bevorzugt werden dabei die elektrischen Antriebe 8 der anderen Schneidwerkarbeitsaggregate 3 ebenfalls gestoppt.

### Bezugszeichenliste

- 1: Landwirtschaftliche Arbeitsmaschine
- 2: Schneidwerk
- 3: Schneidwerkarbeitsaggregat
- 4: Haspel
- 5: Schneidvorrichtung
- 6: Querförderschnecke
- 7: Nachgeordnete Arbeitsaggregate
- 8: Elektrischer Antrieb
- 9: Dreschwerk
- 10: Fahrzeugantrieb
- 11: Generator
- 12: Stromumwandlungssystem
- 13: Elektrisches System
- 14: Steuer- & Regeleinheit
- 15: Vorhandenes Sensorsystem
- 18: Messsignale der vorhandenen Sensorsysteme
- 19: Lastsignal
- 20: Betriebszustand
- 21: Ernte-Regelstrategie
- 22: Steuersignal
- 23: Zustandsinformationen
- 25: Rotationsantrieb
- 26: Linearantrieb
- 27: Anzeigeeinheit
- 28: Fahrzeugkabine
- 30: Verschleißzustand
- 31: Lastzustand
- 32: Überlastungszustand
- 34: Referenzwert
- 37: Warnung
- 38: Verschleißgrad
- 39: Digitaler Wartungsplan
- 41: Soll-Lastzustand
- 42: Überlastungsgrenzwert
- I: Stromstärke
- n: Drehzahl des Rotationsantriebs
- v: Geschwindigkeit des Linearantriebs
- M: Drehmoment des Rotationsantriebs
- F: Lineare Kraft des Linearantriebs
- P: Leistung
- ΔM: Erster Gradient
- ΔF: Zweiter Gradient
- Mmax: Drehmoment-Grenzwert
- Fmax: lineare Kraft-Grenzwert

## Patentansprüche

1. Landwirtschaftliche Arbeitsmaschine (1) mit einem Schneidwerk (2) und einer Steuer- und Regeleinheit (14),
wobei das Schneidwerk (2) elektrische Antriebe (8) zum Betreiben von Schneidwerkarbeitsaggregaten (3) aufweist,
wobei die landwirtschaftliche Arbeitsmaschine (1) mindestens ein
Stromumwandlungssystem (12) zum Betreiben der elektrischen Antriebe (8) aufweist, wobei die elektrischen Antriebe (8) und/oder das Stromumwandlungssystem (12) mindestens ein vorhandenes Sensorsystem (15) aufweisen, dass zum Betrieb und zum Steuern des jeweiligen elektrischen Antriebs (8) der Schneidwerkarbeitsaggregate (3) erforderlich ist,
wobei die Steuer- und Regeleinheit (14) dazu eingerichtet ist, aus Messsignalen (18) des vorhandenen Sensorsystems (15) Lastsignale (19) zu generieren, und
aus den Lastsignalen (19) Betriebszustände (20) der Schneidwerkarbeitsaggregate (3) abzuleiten, wobei
die Steuer- und Regeleinheit (14) dazu eingerichtet ist die Schneidwerkarbeitsaggregate (3) anhand des Betriebszustandes (20) zu regeln und/oder eine Ernte-Regelstrategie (21) der landwirtschaftlichen Arbeitsmaschine (1) an den Betriebszustand (20) anzupassen, und
wobei die Betriebszustände (20) einen Verschleißzustand (30) der jeweiligen Schneidwerkarbeitsaggregate (3) und/oder der zugeordneten elektrischen Antriebe (8) umfassen.

2. Landwirtschaftliche Arbeitsmaschine (1) nach Anspruch 1,
**dadurch gekennzeichnet, dass**
die elektrischen Antriebe (8) als Rotationsantriebe (25) und/oder als Linearantriebe (26) ausgebildet sind, und jeder Rotationsantrieb (25) im Betrieb ein Drehmoment (M) und eine Drehzahl (n), und jeder Linearantrieb (26) im Betrieb eine lineare Kraft (F) und eine Geschwindigkeit (v) aufweist.

3. Landwirtschaftliche Arbeitsmaschine (1) nach einem der vorhergehenden Ansprüche,
**dadurch gekennzeichnet, dass**
die Messsignale (18) eine Stromstärke (I), eine Geschwindigkeit (v) des jeweiligen Linearantriebs (26) und/oder eine Drehzahl (n) des jeweiligen Rotationsantriebs (25) umfassen.

4. Landwirtschaftliche Arbeitsmaschine (1) nach einem der vorhergehenden Ansprüche,
**dadurch gekennzeichnet, dass**
ein erstes Lastsignal (19) ein Drehmoment (M) und/oder eine lineare Kraft (F) des jeweiligen elektrischen Antriebs (8) umfasst, wobei das Drehmoment (M) und/oder die lineare Kraft (F) aus der gemessenen jeweiligen Stromstärke (I) berechnet sind.

5. Landwirtschaftliche Arbeitsmaschine (1) nach einem der vorhergehenden Ansprüche,
**dadurch gekennzeichnet, dass**
ein weiteres Lastsignal (19) eine Leistung (P) des jeweiligen elektrischen Antriebes (8) umfasst, welche aus dem berechneten Drehmoment (M) und der gemessenen Drehzahl (n) des jeweiligen Rotationsantriebs (25), und/oder aus der berechneten linearen Kraft (F) und der gemessenen Geschwindigkeit (F) des jeweiligen Linearantriebs (26) berechnet ist.

6. Landwirtschaftliche Arbeitsmaschine (1) nach einem der vorhergehenden Ansprüche,
**dadurch gekennzeichnet, dass**
die Betriebszustände (20)
• einen Lastzustand (31) und oder
• einen Überlastungszustand (32)
der jeweiligen Schneidwerkarbeitsaggregate (3) und/oder der zugeordneten elektrischen Antriebe (8) umfassen.

7. Landwirtschaftliche Arbeitsmaschine (1) nach einem der vorhergehenden Ansprüche,
**dadurch gekennzeichnet, dass**
die Steuer- und Regeleinheit (14) dazu eingerichtet ist, den Verschleißzustand (30) durch Abgleich des Drehmoments (M), der Drehzahl (n), der linearen Kraft (F) und/oder der Geschwindigkeit (v) der elektrischen Antriebe (8), insbesondere in einem Leerlaufbetrieb, mit abgespeicherten Referenzwerten (34) zu bestimmen.

8. Landwirtschaftliche Arbeitsmaschine (1) nach einem der vorhergehenden Ansprüche,
**dadurch gekennzeichnet, dass**
die Steuer- und Regeleinheit (14) dazu eingerichtet ist, in Abhängigkeit des Verschleißzustands (30) Warnungen (37) und/oder einen Verschleißgrad (38) der Schneidwerkarbeitsaggregate (3) und/oder der elektrischen Antriebe (8) dem Fahrzeugführer anzuzeigen, und/oder den Verschleißzustand (30) in einen digitalen Wartungsplan (39) zu implementieren.

9. Landwirtschaftliche Arbeitsmaschine (1) nach einem der vorhergehenden Ansprüche,
**dadurch gekennzeichnet, dass**
die Steuer- und Regeleinheit (14) dazu eingerichtet ist, den Lastzustand (19) aus dem Drehmoment (M), der linearen Kraft (F) und/oder der Leistung (P) der jeweiligen elektrischen Antriebe (8) abzuleiten.

10. Landwirtschaftliche Arbeitsmaschine (1) nach einem der vorhergehenden Ansprüche,
**dadurch gekennzeichnet, dass**
Soll-Lastzustände (41) für die jeweiligen Schneidwerkarbeitsaggregate (3) und/oder elektrischen Antriebe (8) vorgegeben sind, und
die Steuer- und Regeleinheit (14) dazu eingerichtet ist, bei Abweichung des Lastzustands (19) von dem vorgegebenen Soll-Lastzustand (41) am jeweiligen Schneidwerkarbeitsaggregat (3) eine Fahrzeuggeschwindigkeit der landwirtschaftlichen Arbeitsmaschine und/oder eine Position der Schneidwerkarbeitsaggregate (3) derart anzupassen, sodass der jeweilige Soll-Lastzustand (41) eingehalten wird.

11. Landwirtschaftliche Arbeitsmaschine (1) nach einem der vorhergehenden Ansprüche,
**dadurch gekennzeichnet, dass**
die Steuer- und Regeleinheit (14) dazu eingerichtet ist, bei einem reduzierten Drehmoment (M) und/oder einer reduzierten linearen Kraft (F) die Drehzahl (n) und/oder die Geschwindigkeit (v) der jeweiligen elektrischen Antriebe (8) zu reduzieren.

12. Landwirtschaftliche Arbeitsmaschine (1) nach einem der vorhergehenden Ansprüche,
**dadurch gekennzeichnet, dass**
die Steuer- und Regeleinheit (14) dazu eingerichtet ist, den Überlastungszustand (32) aus dem Drehmoment (M), der linearen Kraft (F), der Drehzahl (n), der Geschwindigkeit (v) und/oder aus deren Gradienten (ΔM,ΔF) abzuleiten, und dass Überlastungsgrenzwerte (42) für die jeweiligen Schneidwerkarbeitsaggregate (3) und/oder elektrischen Antriebe (8) vorgegeben sind, und bei einer Überschreitung mindestens eines Überlastungsgrenzwertes (42) der Überlastungszustand (32) vorliegt.

13. Landwirtschaftliche Arbeitsmaschine (1) nach einem der vorhergehenden Ansprüche,
**dadurch gekennzeichnet, dass**
die Steuer- und Regeleinheit (14) dazu eingerichtet ist, beim Vorliegen des Überlastungszustands (32) den jeweiligen elektrischen Antrieb (8) zu stoppen.

## Claims

1. An agricultural working machine (1) comprising a cutting header (2) and an open-loop and closed-loop control unit (14),
wherein the cutting header (2) has electric drives (8) for operating cutting header working assemblies (3),
wherein the agricultural working machine (1) has at least one power conversion system (12) for operating the electric drives (8),
wherein the electric drives (8) and/or the power conversion system (12) have at least one present sensor system (15) that is required for operation and for control of the respective electric drive (8) of the cutting header working assemblies (3),
wherein the open-loop and closed-loop control unit (14) is adapted to generate load signals (19) from measurement signals (18) of the provided sensor system (15) and from the load signals (19) to derive operating states (20) of the cutting header working assemblies (3) wherein the open-loop and closed-loop control unit (14) is adapted to control the cutting header working assemblies (3) on the basis of the operating state (20) and/or to adapt a harvesting control strategy (21) of the agricultural working machine (1) to the operating state (20), and
wherein the operating states (20) include a wear state (30) of the respective cutting header working assemblies (3) and/or the associated electric drives (8).

2. An agricultural working machine (1) according to claim 1 **characterised in that** the electric drives (8) are in the form of rotary drives (25) and/or linear drives (26) and each rotary drive (25) in operation has a torque (M) and a rotary speed (n) and each linear drive (26) in operation has a linear force (F) and a speed (v).

3. An agricultural working machine (1) according to one of the preceding claims **characterised in that** the measurement signals (18) include a current strength (I), a speed (v) of the respective linear drive (26) and/or a rotary speed (n) of the respective rotary drive (25).

4. An agricultural working machine (1) according to one of the preceding claims **characterised in that** a first load signal (19) includes a torque (M) and/or a linear force (F) of the respective electric drive (8), wherein the torque (M) and/or the linear force (F) are calculated from the respective measured current strength (I).

5. An agricultural working machine (1) according to one of the preceding claims **characterised in that** a further load signal (19) includes a power output (P) of the respective electric drive (8), which is calculated from the calculated torque (M) and the measured rotary speed (n) of the respective rotary drive (25) and/or from the calculated linear force (F) and the measured speed (F) of the respective linear drive (26).

6. An agricultural working machine (1) according to one of the preceding claims **characterised in that** the operating states (20) include
• a load state (31) and/or
• an overload state (32)
of the respective cutting header working assemblies (3) and/or the associated electric drives 8).

7. An agricultural working machine (1) according to one of the preceding claims **characterised in that** the open-loop and closed-loop control unit (14) is adapted to determine the wear state (30) by comparison of the torque (M), the rotary speed (n), the linear force (F) and/or the speed (v) of the electric drives (8), in particular in an idle mode, to stored reference values (34).

8. An agricultural working machine (1) according to one of the preceding claims **characterised in that** the open-loop and closed-loop control unit (14) is adapted in dependence on the wear state (30) to display warnings (37) and/or a degree of wear (38) of the cutting header working assemblies (3) and/or the electric drives (8) to the vehicle driver and/or to implement the wear state (30) in a digital maintenance plan (39).

9. An agricultural working machine (1) according to one of the preceding claims **characterised in that** the open-loop and closed-loop control unit (14) is adapted to derive the load state (19) from the torque (M), the linear force (F) and/or the power output (P) of the respective electric drives (8).

10. An agricultural working machine (1) according to one of the preceding claims **characterised in that** target load states (41) are preset for the respective cutting header working assemblies (3) and/or electric drives (8), and the open-loop and closed-loop control unit (14) is adapted upon a deviation of the load state (19) from the preset target load state (41) at the respective cutting header working assembly (3) to adapt a vehicle speed of the agricultural working machine and/or a position of the cutting header working assemblies (3) in such a way that the respective target load state (41) is observed.

11. An agricultural working machine (1) according to one of the preceding claims **characterised in that** the open-loop and closed-loop control unit (14) is adapted upon a reduced torque (M) and/or a reduced linear force (F) to reduce the rotary speed (n) and/or the speed (v) of the respective electric drives (8).

12. An agricultural working machine (1) according to one of the preceding claims **characterised in that** the open-loop and closed-loop control unit (14) is adapted to derive the overload state (32) from the torque (M), the linear force (F), the rotary speed (n), the speed (v) and/or from the gradients (ΔM, ΔF) thereof, and that overload limit values (42) are preset for the respective cutting header working assemblies (3) and/or electric drives (8) and the overload state (32) occurs when at least one overload limit value (42) is exceeded.

13. An agricultural working machine (1) according to one of the preceding claims **characterised in that** the open-loop and closed-loop control unit (14) is adapted to stop the respective electric drive (8) when the overload state (32) occurs.

## Revendications

1. Machine de travail agricole (1) comprenant un tablier de coupe (2) et une unité de commande et de régulation (14), le tablier de coupe (2) comportant des moyens d'entraînement électrique (8) pour faire fonctionner des organes de travail de tablier de coupe (3), la machine de travail agricole (1) comportant au moins un système de transformation de courant (12) pour faire fonctionner les moyens d'entraînement électrique (8), les moyens d'entraînement électrique (8) et/ou le système de transformation de courant (12) comportant au moins un système de capteurs existant (15) qui est nécessaire pour faire fonctionner et pour commander le moyen d'entraînement électrique respectif (8) des organes de travail de tablier de coupe (3), l'unité de commande et de régulation (14) étant agencée pour générer des signaux de charge (19) à partir de signaux de mesure (18) du système de capteurs existant (15), et pour déduire des états de fonctionnement (20) des organes de travail de tablier de coupe (3) à partir des signaux de charge (19), l'unité de commande et de régulation (14) étant agencée pour réguler les organes de travail de tablier de coupe (3) sur la base de l'état de fonctionnement (20) et/ou pour adapter une stratégie de régulation de récolte (21) de la machine de travail agricole (1) à l'état de fonctionnement (20), et les états de fonctionnement (20) incluant un état d'usure (30) des organes de travail de tablier de coupe respectifs (3) et/ou des moyens d'entraînement électrique (8) associés.

2. Machine de travail agricole (1) selon la revendication 1, **caractérisée en ce que** les moyens d'entraînement électrique (8) sont conformés en moyens d'entraînement rotatif (25) et/ou en moyens d'entraînement linéaire (26), et chaque moyen d'entraînement rotatif (25) présente en fonctionnement un moment de rotation (M) et une vitesse de rotation (n), et chaque moyen d'entraînement linéaire (26) présente en fonctionnement une force linéaire (F) et une vitesse (v).

3. Machine de travail agricole (1) selon une des revendications précédentes, **caractérisée en ce que** les signaux de mesure (18) incluent une intensité de courant (I), une vitesse (v) du moyen d'entraînement linéaire respectif (26) et/ou une vitesse de rotation (n) du moyen d'entraînement rotatif respectif (25).

4. Machine de travail agricole (1) selon une des revendications précédentes, **caractérisée en ce qu'**un premier signal de charge (19) inclut un moment de rotation (M) et/ou une force linéaire (F) du moyen d'entraînement électrique respectif (8), le moment de rotation (M) et/ou la force linéaire (F) étant calculés à partir de l'intensité de courant respective mesurée (I).

5. Machine de travail agricole (1) selon une des revendications précédentes, **caractérisée en ce qu'**un signal de charge supplémentaire (19) inclut une puissance (P) du moyen d'entraînement électrique respectif (8), laquelle est calculée à partir du moment de rotation calculé (M) et de la vitesse de rotation mesurée (n) du moyen d'entraînement rotatif respectif (25), et/ou à partir de la force linéaire calculée (F) et de la vitesse mesurée (F) du moyen d'entraînement linéaire respectif (26).

6. Machine de travail agricole (1) selon une des revendications précédentes, **caractérisée en ce que** les états de fonctionnement (20) incluent
• un état de charge (31) et/ou
• un état de surcharge (32)
des organes de travail de tablier de coupe respectifs (3) et/ou des moyens d'entraînement électrique associés (8).

7. Machine de travail agricole (1) selon une des revendications précédentes, **caractérisée en ce que** l'unité de commande et de régulation (14) est agencée pour déterminer l'état d'usure (30) par comparaison du moment de rotation (M), de la vitesse de rotation (n), de la force linéaire (F) et/ou de la vitesse (v) des moyens d'entraînement électrique (8), en particulier dans un fonctionnement au ralenti, avec des valeurs de référence mémorisées (34).

8. Machine de travail agricole (1) selon une des revendications précédentes, **caractérisée en ce que** l'unité de commande et de régulation (14) est agencée pour montrer au conducteur du véhicule, en fonction de l'état d'usure (30), des alertes (37) et/ou un degré d'usure (38) des organes de travail de tablier de coupe (3) et/ou des moyens d'entraînement électrique (8), et/ou pour implémenter l'état d'usure (30) dans un plan d'entretien numérique (39).

9. Machine de travail agricole (1) selon une des revendications précédentes, **caractérisée en ce que** l'unité de commande et de régulation (14) est agencée pour déduire l'état de charge (19) du moment de rotation (M), de la force linéaire (F) et/ou de la puissance (P) des moyens d'entraînement électrique respectifs (8).

10. Machine de travail agricole (1) selon une des revendications précédentes, **caractérisée en ce que** des états de charge de consigne (41) sont prescrits pour les organes de travail de tablier de coupe (3) et/ou les moyens d'entraînement électrique (8) respectifs et, en cas de déviation de l'état de charge (19) par rapport à l'état de charge de consigne prescrit (41) au niveau de l'organe de travail de tablier de coupe respectif (3), l'unité de commande et de régulation (14) est agencée pour adapter une vitesse de véhicule de la machine de travail agricole et/ou une position des organes de travail de tablier de coupe (3), de façon que l'état de charge de consigne respectif (41) soit respecté.

11. Machine de travail agricole (1) selon une des revendications précédentes, **caractérisée en ce que** l'unité de commande et de régulation (14) est agencée pour réduire la vitesse de rotation (n) et/ou la vitesse (v) des moyens d'entraînement électrique respectifs (8) en as de moment de rotation (M) réduit et/ou en cas de force linéaire (F) réduite.

12. Machine de travail agricole (1) selon une des revendications précédentes, **caractérisée en ce que** l'unité de commande et de régulation (14) est agencée pour déduire l'état de surcharge (32) à partir du moment de rotation (M), de la force linéaire (F), de la vitesse de rotation (n), de la vitesse (v) et/ou de leurs gradients (ΔM, ΔF), et **en ce que** des valeurs limites de surcharge (42) sont prescrites pour les organes de travail de tablier de coupe (3) et/ou les moyens d'entraînement électrique (8) respectifs et, en cas de surpassement d'au moins une valeur limite de surcharge (42), l'état de surcharge (32) est avéré.

13. Machine de travail agricole (1) selon une des revendications précédentes, **caractérisée en ce que** l'unité de commande et de régulation (14) est agencée pour arrêter le moyen d'entraînement électrique respectif (8) en présence de l'état de surcharge (32).
